# FASCICULE DE BREVET EUROPEEN

(11) **EP 0 717 925 B1**
(45) Date de publication et mention de la délivrance du brevet: **06.05.1999**
(21) Numéro de dépôt: 95810790.6
(22) Date de dépôt: 13.12.1995
(51) Int. Cl.: A01H 1/04, A23L 1/221

(54) **Matière végétale séchée de plants d'épices à haute teneur en antioxydants et huiles essentiells**
Getrocknetes pflanzliches Material von Gewürzpflanzen mit einem hohen Gehalt an Antioxydanten und essentiellen Ölen
Dried plant material from spices with a high content of antioxidants and essential oils

(30) Priorité: 20.12.1994 FR 9415343
(43) Date de publication de la demande: 26.06.1996
(73) Titulaire: SOCIETE DES PRODUITS NESTLE S.A., 1800 Vevey (CH)
(72) Inventeur: Aeschbach, Robert, CH-1800 Vevey (CH); Masseret, Bernard, F-37390 Notre Dame D'Oe (FR)

(56) Documents cités:
- EP-A- 0 454 097
- FR-A- 2 547 981
- FR-A- 2 548 523

## Description

La présente invention est relative à une matière vegététale sechée de plants d'épices, notamment de sauge ou de romarin, présentant simultanément un contenu élevé en antioxydants et en huile essentielle, et à son utilisation comme matière première, à la fois pour l'obtention d'antioxydants à des fins notamment d'additifs alimentaires et également comme source d'huile essentielle pour la parfumerie.

La connaissance et l'emploi des épices remontent aux périodes les plus anciennes de notre civilisation ; non seulement pour leur utilisation en tant qu'aromates et de condiments ou pour leurs propriétés médicamenteuses, mais aussi dans un rôle fonctionnel important pour la préservation des aliments ; cet effet est dû non seulement à un effet de masquage des odeurs résultant de la détérioration de l'aliment, mais surtout à une action protectrice antioxydante et tout particulièrement un effet bactéricide et bactériostatique permettant de retarder la détérioration des aliments par les micro-organismes ; cet effet a été décrit par Pruthi (1980) (1) et Shelef (1983) (2).

Les numéros entre parenthèse renvoient aux références bibliographiques en fin de description.

La mise en évidence des propriétés anti-oxygène de certaines épices remonte à une quarantaine d'années, quand JR Chipault (1952, 1955, 1956) (3,4,5) entreprit l'étude desdites épicés. Les travaux de Chipault ont trouvé un regain d'intérêt il y a une vingtaine d'années, lorsque des doutes, confirmés par la suite, furent émis sur l'innocuité du butyl-hydroxy-toluène (BHT), antioxydant de synthèse très performant et largement utilisé avec le butyl-hydroxy-anisole (BHA) pour la protection des aliments. L'intérêt pour le rôle antioxydant de certaines épices s'est amplifié depuis peu, avec l'engouement des consommateurs occidentaux pour les produits alimentaires naturels, et plusieurs oléorésines d'épices, notamment de romarin, sont proposés actuellement sur le marché pour prévenir l'oxydation des aliments.

Parmi ces épices et herbes aromatiques possédant une activité anti-oxygène, la sauge et le romarin sont parmi les plus prometteuses. Leur pouvoir antioxydant est dû à la présence dans ces plantes de composés tels que l'acide carnosique et l'acide rosmarinique, qui agissent en synergie avec un ensemble de flavonoïdes suivant des mécanismes complexes qui n'ont pas été complètement élucidés.

Au cours des quinze dernières années, plusieurs types d'oléorésines, de romarin ont été mis au point, offerts sur le marché et utilisés par l'industrie alimentaire. Leur activité antioxygène dans les matières grasses et les produits alimentaires a été démontrée. Ces oléorésines s'utilisent en général à un dosage voisin de 500 ppm calculé sur la matière grasse des aliments, dosage proche de celui des matières aromatisantes naturelles et employées pour améliorer l'appétence des produits alimentaires.

Différents procédés ont été proposés pour extraire l'oléorésine des épices et plus particulièrement, du romarin. L'extraction peut être réalisée en plusieurs étapes en utilisant des solvants polaires ou non, ainsi que leurs mélanges : huile végétale ou graisse animale (6), l'hexane, le benzène, l'éther éthylique, le chloroforme, le dichlorure d'éthylène, le dioxane ou le méthanol (7,8), l'éthanol ou le benzène (9), l'hexane ou l'éthanol (10, 11), le CO₂ supercritique (12, 13, 14) ; on peut citer également les brevet EP 307 626 et la demande de brevet EP 507 064. L'ensemble de l'état de la technique décrit dans ces demandes de brevet et dans les articles cités ci-dessus est incorporé ici par référence, en particulier pour ce qui est des procédés d'extraction des antioxydants des plantes, procédés qui peuvent être également appliqués aux plants de l'invention.

L'extraction s'accompagne souvent d'une désodorisation et/ou d'une décoloration de l'oléorésine ; certains traitements permettent de traiter l'oléorésine pour éliminer les insolubles dans les corps gras (brevet US 4.877.635, brevet EP 0.009.661 et références 14, 15, 16).

Aeschbach (Brevets Européens 0.307.626 et 0.507.064) a développé des procédés pour obtenir des extraits antioxydants de romarin ou de sauge sous forme de poudre ou de liquide translucide. Ces extraits sont riches en antioxydants, plus particulièrement en acide carnosique et carnosol, les deux antioxydants principaux du romarin et de la sauge. L'acide carnosique a été isolé et identifié par Aeschbach et Philippossian (Demande de Brevet Européen EP 0.480.077). L'oxydation de l'acide carnosique conduit au carnosol qui lui-même est doué de propriétés antioxydantes ; la présence d'un groupe isopropyle dans ces deux composés jouent un rôle important dans la stabilisation des radicaux formés en cours d'oxydation.

Aeschbach (17) a mis en évidence l'existence de 13 hétérosides dans le romarin, contribuant de façon mineure (synergisme), comme l'acide rosmarinique, à l'effet antioxydant.

Plusieurs travaux ont été publiés sur l'effet antioxygène des oléorésines de romarin dans les aliments (8, 14, 15). Dans les trois cas et bien que les oléorésines utilisées soient d'origine différente elles exercent dans les systèmes étudiés un effet protecteur voisin de celui apporté par le BHT seul ou en mélange avec le BHA et le gallate de propyle, ces derniers étant utilisés toutefois à une dose plus faible. La qualité des oléorésines obtenues et plus précisément leur effet antioxygène va dépendre non seulement des paramètres d'extraction (type de solvant, température, durée) mais également de la qualité du végétal mis en oeuvre, de son origine, des conditions climatiques, des conditions de culture et de récolte ainsi que l'indique l'étude de Granger (18) sur l'essence de romarin. Dans ce contexte, les plants de romarin ou de sauge utilisés habituellement ont une application orientée vers l'extraction des huiles essentielles.

Aussi les matières végétales obtenues résultant après une distillation aqueuse permettant d'obtenir l'huile essentielle ont une composition en antioxydants éminemment variable les rendant impropres à une utilisation industrielle comme matières premières à l'obtention d'antioxydants ou d'épices utilisables à titre d'additifs alimentaires, et ont toujours été jetées.

### Résumé de l'invention

L'invention résulte de la découverte selon laquelle il était possible d'obtenir, à partir de certaines épices, une matière végétale ayant à la fois des teneurs élevées et stables en antioxydants et en huiles essentielles.

L'obtention de plants desdites épices, et de matières végétales issues desdits plants offre un nouvel intérêt économique qui est leur valorisation à la fois dans l'industrie agro-alimentaire et dans la parfumerie.

Aucune sélection d'épices au regard de leur teneur en antioxydants n'a jamais été effectuée et les populations naturelles de plantes les contenant présentent une grande variabilité quant à cette teneur et l'activité antioxydante y associée.

Dans l'objectif d'obtention des plants présentant la caractéristique d'une haute teneur en antioxydant, il était dans un premier temps important de savoir si une telle caractéristique était liée ou non à leur contenu en huile essentielle.

Pour effectuer le criblage de plants de romarin présentant les caractéristiques requises, il fallait préalablement mettre au point une méthodologie. Celle-ci consiste dans un premier temps à sélectionner une collection de plants de romarin présentant des génotypes différents, puis d'effectuer une propagation végétative de chacun des plants collectés et ce, en champs, à raison de cinq réplications de cinq plants par génotypes soit 25 plants par génotypes. Dans le présent texte seront utilisés indifféremment les termes de génotype, ou de clone pour désigner des individus identiques génétiquement et propagés par voie végétative. Le plant est défini comme la plante sélectionnée avant sa mise en place en terre, autrement dit un plant donné correspond nécessairement à un clone donné ; en revanche à un clone peuvent correspondre plusieurs plants ; cet ensemble de plants génétiquement identiques est défini comme un cultivar.

Matière végétale signifie toute matière première issue d'un plant ou d'un cultivar destiné à être transformé pour en extraire une substance ; dans le cas de la présente invention, il peut s'agir de la plante entière sèche, ou des feuilles séchées.

Dans la méthodologie de criblage des clones répondant aux critères choisis, il était nécessaire d'utiliser plusieurs sites d'essais en champs avec la même collection sélectionnée au départ, les analyses des échantillons collectés se faisant par la suite en parallèle et en aveugle.

L'autre paramètre essentiel de la méthodologie de criblage est la définition d'un procédé d'extraction et ou de purification commun pour tous les laboratoires travaillant sur le projet et pour les différents sites d'essais en champs.

Un troisième paramètre essentiel dans la présente méthodologie est la mise au point de procédures analytiques communes et l'évaluation de la déviation standard obtenue à partir de la récolte des 25 plants des clones considérés ; la méthodologie implique enfin la mise en évidence d'éventuelles modifications physiologiques en fonction soit du rythme journalier soit du rythme mensuel ; il va de soi que le rythme saisonnier conduit à des modifications notamment dans la teneur en huile essentielle, la production étant plus importante pendant les mois d'été (de chaleur) que dans les mois d'hiver.

Après avoir calculé la déviation standard des paramètres que sont : le contenu en huile essentielle soit après décantation soit après extraction, le temps d'induction de l'extrait éthanolique mesuré par le test Rancimat (19, 20), le contenu en carnosol, en acide carnosique, en verbenone ainsi que leur rendement d'extraction respectif, chaque paramètre est mesuré et les différents cultivars provenant d'une collections de 44 clones de cultures effectuées sur deux sites différents, en France (Francereco) ou en Espagne (Hispareco) ont été criblés au regard de ces différents paramètres et les résultats sont les suivants :
a) les variations journalières du contenu en huile essentielle, ainsi que en carnosol + acide carnosique (antioxydants) sont insignifiantes quelque soit le lieu de culture. Malgré tout par souci d'homogénéisation toutes les récoltes sont faites en début d'après-midi ;
b) pour ce qui concerne des variations bimensuelles en huile essentielle et en acide carnosique + carnosol (antioxydants) il a été montré une bonne stabilité entre août et octobre en France et entre juillet et septembre en Espagne. Des exemples et des courbes détaillés sont présentés plus loin et on peut en conclure que la meilleure période de récolte est le mois d'août en Espagne et le mois de septembre ou octobre en France.

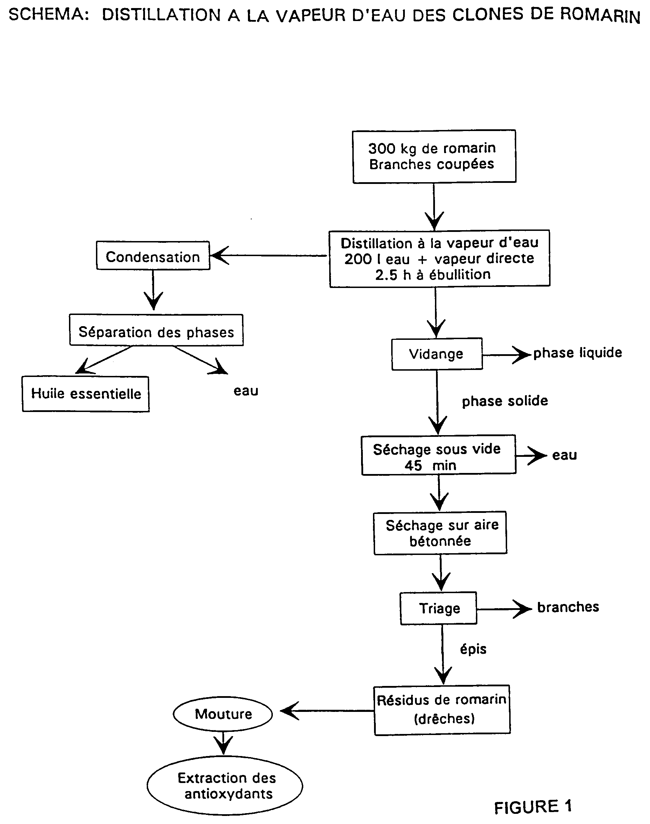

La figure 1 est un schéma représentant le procédé de distillation à la vapeur d'eau des clones de romarin pour obtenir l'huile essentielle d'une part et les résidus de romarin d'autre part.

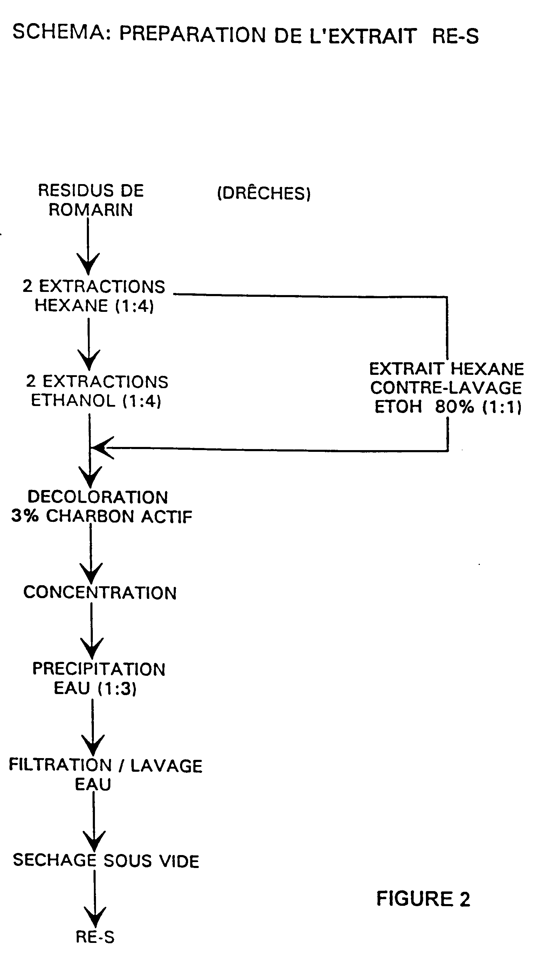

Les résidus obtenus après distillation acqueuse de la matière végétale sont appelés 〈〈 drêche 〉〉, et ils sont traités ensuite pour en extraire les antioxydants, comme schématisé sur la figure 2.

L'ensemble du procédé de sélection de cultivars de romarin par la méthodologie décrite plus haut ainsi que les différentes étapes dudit procédé font partie de l'invention, l'objectif du travail rappelé au début étant d'obtenir une matière première valable au plan industriel et permettant d'extraire des antioxydants utilisables notamment en agro-alimentaire ; si, en outre, le contenu en huile essentielle y est relativement important, la même matière première pourrait alors par une sorte de 〈〈 cracking 〉〉 être utilisée à la fois dans l'industrie de la parfumerie et dans l'industrie agro-alimentaire.

Grâce aux différents paramètres calibrés de la façon décrite plus haut, il a été possible de sélectionner des plants d'épices, caractérisés en ce que la matière végétale qui en est issue présente simultanément un contenu élevé en antioxydants et en huile essentielle. Cette matière végétale, objet de l'invention, est en outre caractérisée par son contenu en antioxydants qui est supérieur à 1% en poids du végétal frais ou supérieur à 3,5% en poids de matières séches, et leur contenu en huile essentielle qui est supérieur à 0,3% en poids sur le végétal frais ou supérieur à 1,5% en poids de matières séches. Les plants d'épices possédant ces caractéristiques font partie de l'invention. Le romarin et la sauge sont deux épices particulièrement propices à l'obtention de la matière végétale de l'invention. La description détaillée ci-dessous met en évidence que deux clones de romarin sont particulièrement intéressants de ce point de vue : les clones 28 et 39.

Les teneurs en huile essentielle (EO) et en antioxydants (AO) dans la matière végétale permet de calculer la quantité totale d'EO et AO pouvant être obtenue par plant (EOP et AOP) soit le produit :
teneur (en pourcentage) x par matière sèche (gramme par plant). Les plantations d'épices et notamment de romarin présentent un rendement à l'hectare éminemment variable notamment pour ce qui concerne le rendement en poids de feuilles séchées, source aussi bien des antioxydants que de l'huile essentielle. Les plants de romarin de l'invention, sélectionné par la méthodologie de l'invention présentent l'intérêt d'avoir un rendement à l'hectare supérieur à 7000 Kg/Ha, permettant d'obtenir un rendement à l'hectare d'antioxydants d'au moins 270 kg/Ha et un rendement à l'hectare d'huile essentielle d'au moins 120 Kg/Ha.

Les plants de romarin de l'invention, et sélectionnés par la méthodologie décrite plus haut présentent une variation journalière ou bimensuelle de leur teneur en antioxydants et/ou en huiles essentielles inférieure à 20%.

Les clones ainsi sélectionnés peuvent être caractérisés sur le plan moléculaire par une empreinte moléculaire (finger print) la technique utilisée étant celle décrite dans (22) et plus loin dans l'exemple sur les empreintes moléculaires.

La présente invention est également relative à l'utilisation de la matière végétale séchée des plants d'épices selon la revendication 4. L'utilisation de ces plants de romarin permet en outre, par une distillation aqueuse des feuilles séchées l'obtention de l'huile essentielle utilisable en parfumerie de façon très avantageuse dans la mesure où son taux est égal ou supérieur à celui du taux des plantes sauvages habituellement utilisées en parfumerie.

La méthodologie utilisée a été appliquée de façon systématique sur des plants de romarin et décrite ci-après. La transposition à d'autres types d'épices notamment la sauge, le thym, l'origan ou la girofle est aisément transposable par l'homme du métier, étant connus les différents procédés d'extraction utilisables (6 à 13).

Le procédé de sélection des nouveaux plants de romarin selon le critère d'activité antioxydante défini plus haut permet en outre l'obtention de plants présentant une DHS (différence, homogénéité, stabilité) qui permet, par multiplication végétative, d'avoir une matière première constante et donc valable à des fins d'utilisation industrielle. Dans la présente description, la méthodologie employée pour la sélection des clones d'épices présentant les caractéristiques souhaitées et les exemples à l'appui de cette méthodologie sont présentés pour des plants de romarin. Il est clair qu'à partir du moment où l'on recherche des épices qui présentent à la fois les caractéristiques d'être une matière première pour des additifs alimentaires et pour l'obtention d'huiles essentielles utilisables en parfumerie, la méthodologie observée et décrite en détail plus loin peut être transposée à l'obtention de nouveaux clones présentant ces caractéristiques ; aussi tout ce qui dans le texte est relatif au romarin, peut s'appliquer également à d'autres types de plantes aromatiques.

### Description détaillée de l'invention

La description détaillée ci-dessous et les figures qui l'accompagnent mettent bien en évidence la méthodologie utilisée dans le procédé de sélection de clones ayant à la fois une haute teneur en huile essentielle et en antioxydants, et les caractéristiques mêmes de ces plantes sélectionnées. Dans un premier temps les détails sur les différentes étapes du procédé notamment : la méthodologie de criblage, la réalisation des essais en champs, la méthode de distillation, les procédés analytiques, les résultats de dosages en huile essentielle obtenus dans les clones sélectionnés ainsi que des dosages en antioxydants, enfin les rendements à l'hectare obtenus aussi bien pour l'huile essentielle que pour les antioxydants ont été calculés.

Les légendes des figures citées ci-après sont les suivantes :
La figure 1 est un exemple de schéma montrant le 〈〈 cracking 〉〉 ou la distillation du romarin conduisant à l'obtention de l'huile essentielle d'une part par distillation aqueuse et de résidus de romarin appelés drêches.
La figure 2 décrit le procédé d'obtention d'un extrait d'antioxydant à partir des drêches. RE-S signifie l'extrait sec.
La figure 3 représente les variations journalières de la teneur en EO et AO de deux clones puis au hasard : les clones 28 et 30. HE = huiles essentielles (équivalent à EO). AO = antioxydants.
La figure 4 représente les variations bimensuelles en EO (HE) et en AO en fonction de la date de récolte ; la figure 4a reporte les résultats obtenus en France (Francereco) et la figure 4b ceux obtenus en Espagne (Hispareco).
La figure 5 représente le contenu en huile essentielle des 44 clones exprimés en pourcentage de poids (en g pour 100 gr) de matière sèche, obtenus en Espagne et (EOH) et en France (EOF).
La figure 6 représente le contenu en antioxydants, en g pour 100 gr de matière sèche, en France (AOF) et en Espagne (AOH) pour les 44 clones analysés.
La figure 7 représente l'évaluation du contenu en huile essentielle de 44 clones testés, exprimés soit en pourcentage de matières sèches, soit en gramme par plante.
La figure 8 représente l'évaluation du contenu en antioxydants de ces mêmes clones, exprimés soit en pourcentage de matières sèches, soit en gramme par plante.

### 1) METHODES ET PROCEDES.

### 1.1 Méthodologie de criblage.

Jusqu'à présent les plants de romarins n'ont jamais été considérés quant à leur activité antioxydante. Cela signifie que dans la population naturelle ce critère est éminemment variable aussi la méthodologie utilisée a-t-elle été de :
- réaliser une prospection botanique,
- de réaliser une propagation végétative de chacun des plants collectés,
- de réaliser un criblage de la collection de clones par un essai randomisé sur deux lieux distincts.

Préalablement à ces essais, il était nécessaire de définir un procédé de distillation et d'extraction commun pour tous les sites d'expérimentation, puis d'évaluer la déviation au standard des procédés analytiques mis au point, et de mettre s'il existe en évidence un effet possible de la période de récolte soit dans un jour donné soit dans un mois donné, et enfin une évaluation d'un effet possible de la date de récolte pendant la saison de croissance active.

Dans l'optique de limiter le nombre d'analyses, il a été récolté un échantillon de chaque clones répliqués au sein d'un cultivar et de les mélanger avant l'analyse. Cela permet de diviser par 5 le nombre d'analyses par clone. Cela permet, d'observer l'année suivante chaque réplication de chaque meilleur clone sélectionné et des 5 parmi les plus mauvais tels que déterminés pendant l'année précédente.

### 1.2 Essais en champs.

Il a été établi une collection d'environ cent plants de romarins ; un premier groupe de 44 génotypes a été rassemblé.

Chacun de ces génotypes a été ensuite propagé en champs ; les essais en champs randomisés incluent 5 réplications de 5 plants par génotype ce qui donne 25 plants par clone, l'ensemble de ces 25 plants représentant un cultivar.

### 1.3. Procédés de distillation et d'extraction.

Les figures 1 et 2 sont un exemple de procédé utilisé pour l'obtention de l'huile essentielle et des antioxydants.

Dans la figure 2 les résidus de romarin sont extraits deux fois à l'hexane (en proportion 1:4) suivi de deux extractions à l'éthanol (1:4). L'extrait à l'hexane est contrelavé avec éthanol 80% (p/p) et la phase éthanolique est ajoutée à l'extrait à l'éthanol. Cet extrait est ensuite décoloré par 3 % de charbon actif, concentré, précipité à l'eau puis filtré et séché. Le procédé utilisé est décrit en détail dans le brevet EP 307 626 et dans la demande de brevet EP 507 064 lorsque l'on souhaite obtenir un extrait liquide d'antioxydant.

D'autres variantes d'extraction d'antioxydants sont également décrites dans la demande de brevet EP 480 077, et incorporées ici par référence.

Les procédés utilisés dans les différents sites d'essais en champs sont les mêmes d'un site à l'autre. Les résidus obtenus après distillation de la poudre de romarin et réextraite avec du diéthyléne ; ultérieurement, cette seconde extraction a été supprimée car inutile : très peu d'huiles essentielles ont été obtenues par distillation au diéthyléne, la classification des clones était semblable que ce soit uniquement par distillation simple ou par les deux distillations successives aussi des considérations simples d'amélioration du rendement conduisent à éliminer cette deuxième distillation.
Les huiles essentielles sont obtenues par broyage des parties terminales de tiges séchées puis extraction par hydro-distillation à raison de 15 ml/gr de poudre puis l'huile essentielle est extraite par de l'éther puis filtrée après refroidissement et rincée avec 50 ml d'eau, suivie par deux extractions en phase aqueuse volume à volume avec du diéthylether.

### 1.4 Procédés analytiques

### a) Evaluation de l'activité antioxydante.

La concentration des composés impliqués dans l'activité antioxydante est évaluée par des analyses réalisées sur un extrait éthanolique de la poudre brute de romarin.

L'activité antioxydante résulte essentiellement de l'acide carnosique et du carnosol ; la quantité de chacune des ces deux substances dans l'extrait est évaluée par HPLC (21).

L'activité antioxydante de l'extrait est mesurée par la méthode Rancimat (19, 20) sur une graisse de poule.

### Test Rancimat

Le test Rancimat a été utilisé à 100°C selon des méthodes publiées dans Woestenburg (20). Un aliquot d'extrait, correspondant à 500 ppm de matière sèche, a été ajouté à une graisse de poule désodorisée et on a déterminé le temps d'induction de cette graisse 〈〈 stabilisée 〉〉. La graisse de poule désodorisée a été préparée selon une méthode publiée (19) ; il a été vérifié que l'éthanol introduit dans la graisse pendant la préparation des échantillons n'influence pas les résultats obtenus.

Les mesures de Rancimat obtenues sur les 36 clones testés sont résumés dans le tableau 1 ci-dessous, qui en outre donne les valeurs obtenues pour le contenu en acide carnosique + carnosol exprimé en pourcentage de matière séche.

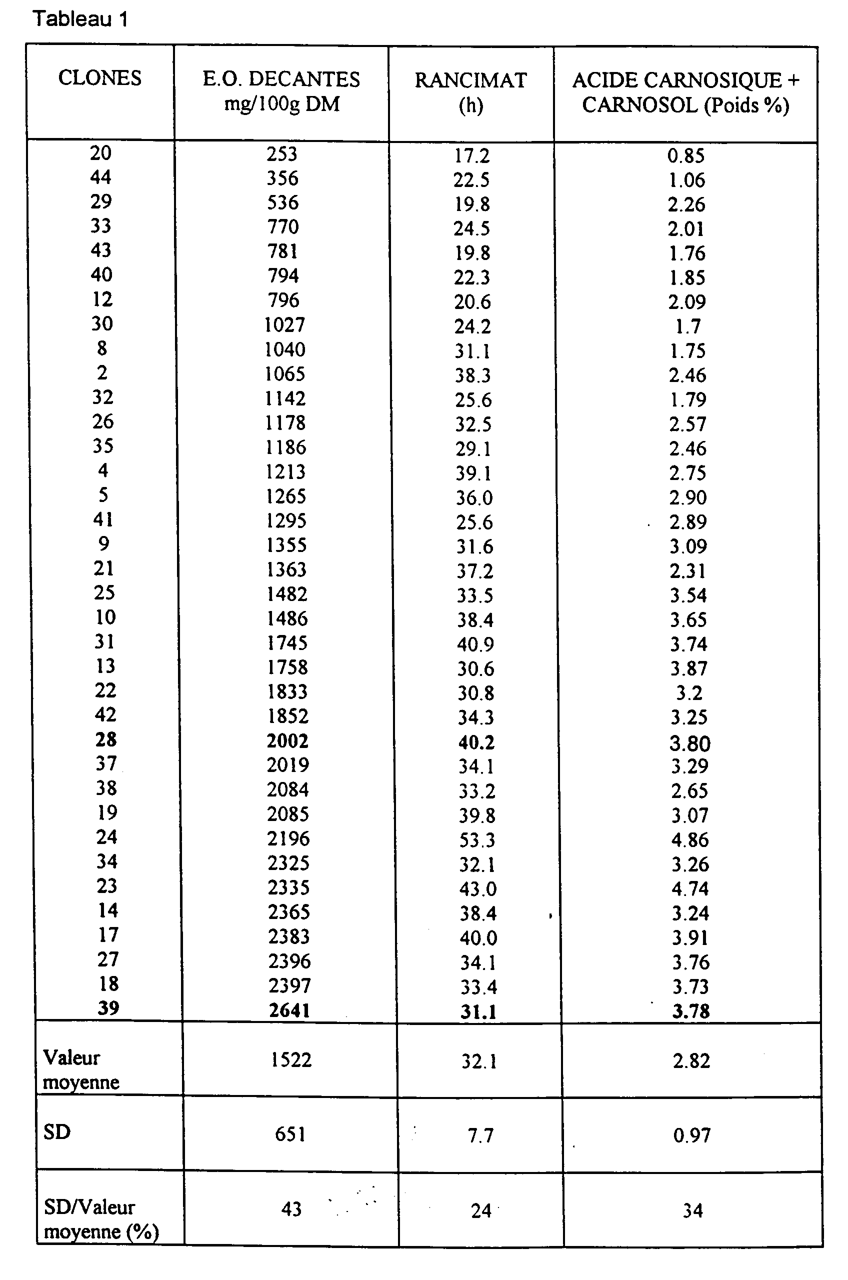

Ce tableau fait clairement apparaître une corrélation entre la quantité d'huile essentielle décantée et la valeur de Rancimat même si des variations existent.

### SD signifie 〈〈 déviation standard 〉〉.

### Evaluation de carnosol et d'acide carnosique par HPLC.

Cette technique est bien connue de l'homme du métier ; un exemple de réalisation est décrit dans (21), et les résultats obtenus présentés dans le tableau 1 ci-dessus.

### b) Analyse de déviation standard des différents paramètres.

La déviation standard a été évaluée pour les paramètres suivants :
- le contenu en matière sèche de la poudre,
- le volume et le poids des huiles essentielles extraites par distillation vapeur,
- le poids d'huiles essentielles extraites d'un résidu diéthyl-ether,
- le test Rancimat,
- et la concentration de certains des composés impliqués dans les activités antioxydantes.

Le tableau 2 ci-dessous indique les valeurs moyennes obtenues sur les différents paramètres, la déviation standard et le pourcentage de la déviation standard sur la valeur moyenne et ce pour le pourcentage de matières sèches, les huiles essentielles décantées exprimées en ml pour 100 gr de matière sèche, les huiles essentielles décantées exprimées en ml pour 100 gr de matière sèche, les huiles essentielles extraites exprimées en mg pour 100 gr de matière sèche, le test Rancimat réalisé en Espagne, le test Rancimat réalisé en France et pour ce qui est des extraits à activité antioxydante sont mesurés le contenu en carnosol, le contenu en acide carnosique, la somme des deux, le verbenone et le rendement (également en pourcentage) ; pour ce qui est de l'activité antioxydante, ES signifie les valeurs obtenues avec les essais en Espagne et (FR) signifie les résultats obtenus à partir des essais en France.

**Tableau 2**

| | | **Valeur Moyenne** | **SD.** | **SD/val. moyenne (%)** |
|---|---|---|---|---|
| EO | Matière Sèche % | 91.1 | 0.27 | 0.29 |
| | DEC EO ml/100g MS | 0.39 | 0.046 | 11.79 |
| | DEC EO mg/100g MS | 374 | 33 | 8.82 |
| | Rancimat Espagne | 13.18 | 3.30 | 25.10 |
| | Rancimat France | 23.20 | 6.06 | 26.12 |
| AO | Carnosol ES (FR) | 0.574 (0.433) | 0.046 (0.025) | 8.18 (6.10) |
| | Acide carnosique ES (FR) | 2.3522 (3.71) | 0.133 (0.0624) | 5.56 (1.66) |
| | Somme AO : ES (FR) | 2.93 (4.14) | 0.123 (0.051) | 4.23 (1.23) |
| | Verbenone ES (FR) | 0.308 (0.173) | 0.082 (0.004) | 2.67 (2.15) |
| | Rendement (%) ES (FR) | 21.15 (14.89) | 0.453 (0.754) | 2.14 (5.07) |

Le coefficient de variation le plus important est observé pour l'évaluation du Rancimat pour laquelle il atteint 25%. Au contraire les mesures analytiques obtenues à partir d'un extrait brut, ou sur un composé défini présente toujours un coefficient de variation inférieur à 9% sauf pour le volume d'huile essentielle obtenu pour 100 gr de matière sèche qui est de 11,8% ; ce dernier paramètre n'est probablement pas si fiable que les autres du fait des difficultés de mesures sur un petit volume : aussi la mesure du poids/poids plutôt que celle du volume/poids est beaucoup plus fiable et doit être adoptée.

Ces résultats indiquent donc que les paramètres mesurés et les procédés mis en oeuvre sont fiables et aptes à être utilisés dans un processus de sélection de clones à haute teneur en EO et en AO.

### 1.5. Variations climatiques

En dehors des variations inhérentes aux procédés analytiques, il était nécessaire d'étudier les variations journalières d'une part et les variations bimensuelles d'autre part

### a) Evaluation des variations journalières.

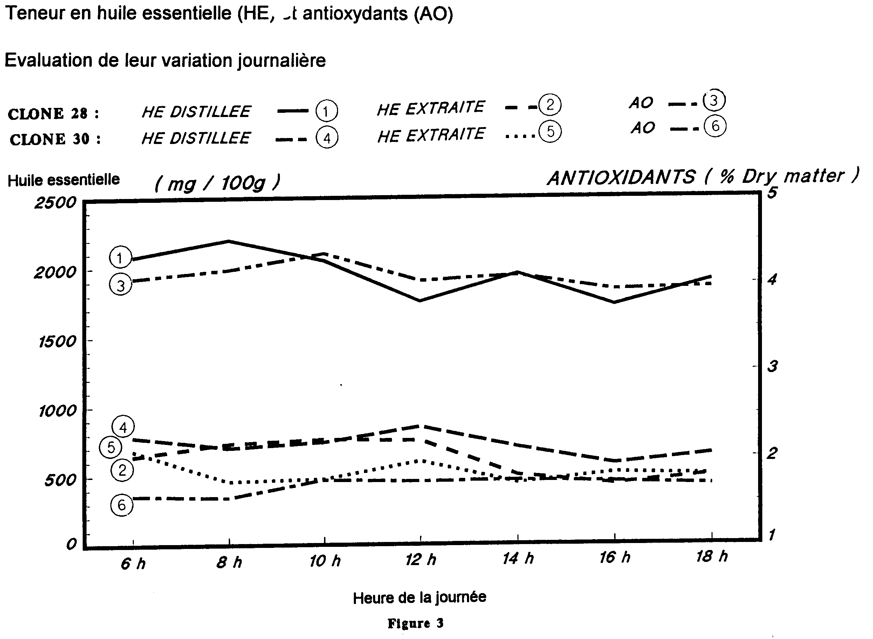

Deux clones choisis au hasard (28 et 30) ont été récoltés chaque deux heures entre 6 heures et 18 heures en France et en Espagne; les paramètres analysés ont été le contenu en huile essentielle distillée ou extraites d'une part et en carnosol plus acide carnosique d'autre part ; la figure 3 représente les résultats obtenus et indique que les variations journalières ne sont pas significatives et ce pour aucun des paramètres mesurés

### b) Evaluation de variations bimensuelles

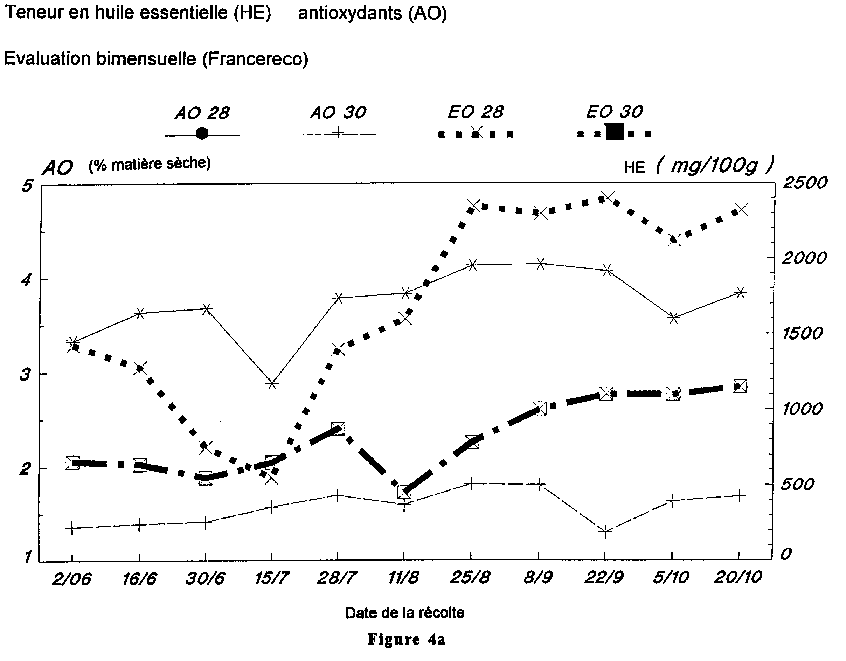

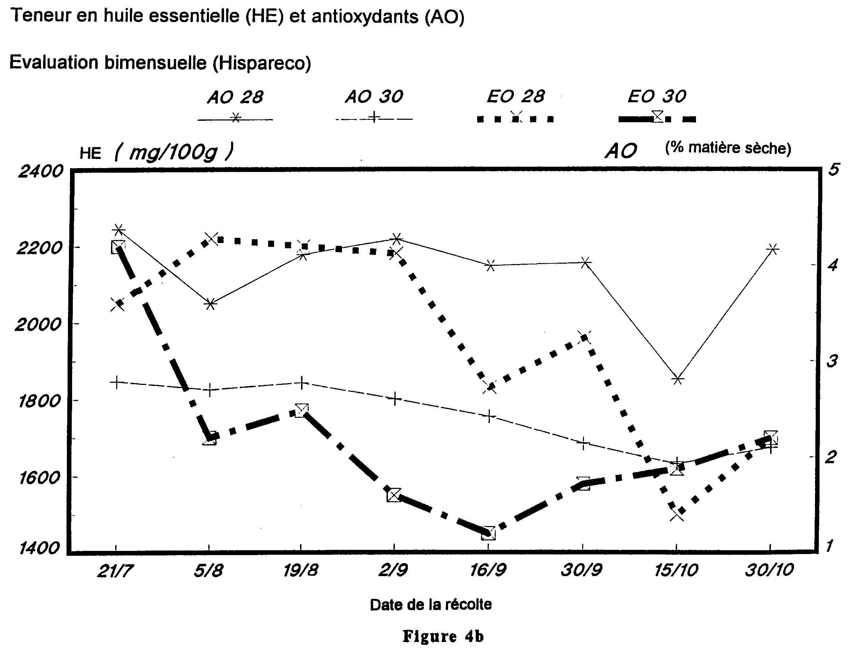

Les mêmes clones ont été récoltés chaque deux semaines entre la mi-juin et la fin du mois d'octobre (en France) et entre la mi-juillet et la fin du d'octobre en Espagne. Les mêmes paramètres ont été utilisés pour évaluer une éventuelle variation. Les figures 4a et 4b représentent ces variations bimensuelles. Il apparaît :
- des variations importantes dans le contenu en huile essentielle selon la période de récolte, ce contenu étant relativement stable de la fin août à la fin octobre en France et de la fin juillet à la fin août en Espagne ; ceci est parfaitement logique compte tenu des différences climatiques entre la France et l'Espagne. Le contenu en activité antioxydante est stable dans la période utilisée. Ces résultats indiquent que la période de récolte optimale est août en Espagne , septembre ou octobre en France.

### 2) CRIBLAGE DES CLONES.

L'ensemble de ces paramètres étant calibré, le criblage des clones parmi les 44 plants étudiés a pu être réalisé sur tous les génotypes.

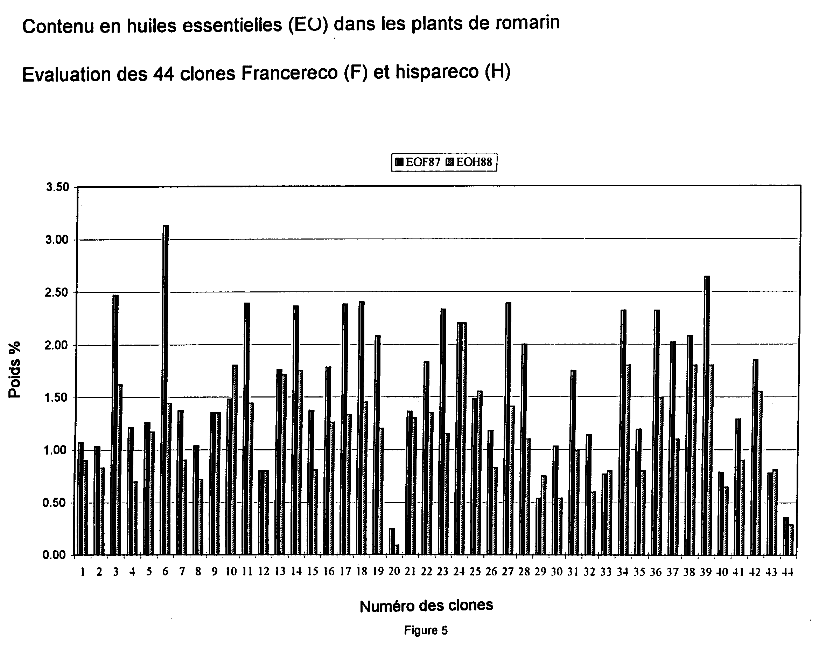

La figure 5 indique le contenu en huile essentielle des 44 clones exprimés en pourcentage de poids (de matière sèche) obtenu en Espagne et (EOH) et en France (EOF).

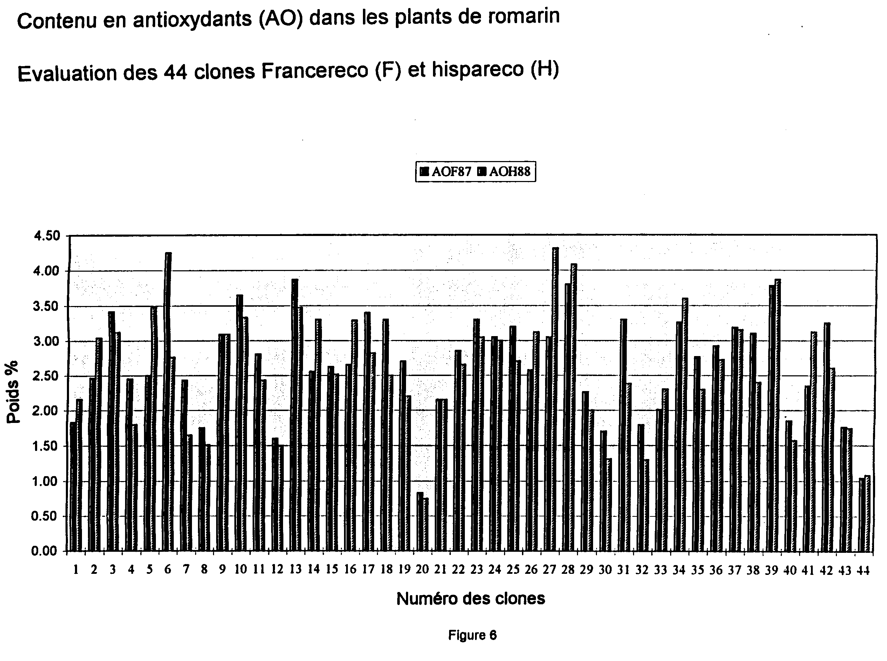

La figure 6 représente le contenu en antioxydants en g pour 100 gr de matière sèche en France (AOF) et en Espagne, (AOH) pour les 44 clones analysés.

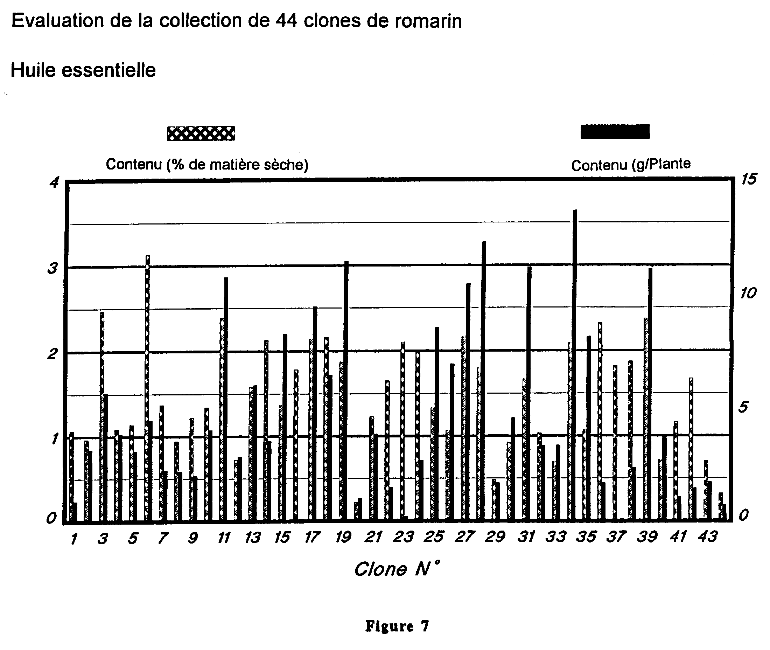

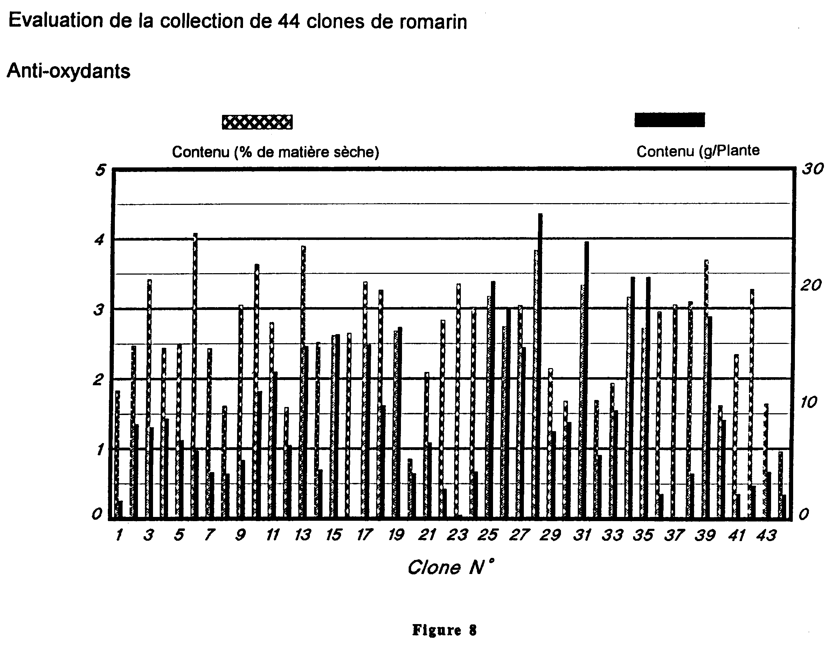

La figure 7 représente la teneur en huile essentielle et la quantité d'huile essentielle obtenue par plants (EOP); de façon parallèle la figure 8 représente la teneur en antioxydants (en pourcentage) et le contenu d'antioxydants par plante (AOP). Il apparaît clairement dans ces figures que les deux paramètres ne sont pas corrélés et que certains plants peuvent avoir une forte teneur en antioxydants (figure 8) et par contre présenter un contenu relativement faible (cas des clones n°1, 23 ou 37 par exemple). En revanche, les clones intéressants selon l'invention sont ceux qui ont à la fois une bonne teneur en antioxydants et un contenu par plante élevé ce qui est observé sur les clones 28 et 39. De la même façon on voit qu'il n'y a guère de corrélation entre la teneur en huile essentielle et le contenu par plantes : les clones 11, 19, 27, 28, 34 et 39 sont particulièrement intéressant quand à la valeur des deux critères réunis.

Les conclusions que l'on peut tirer de l'observation des figures 5 à 8 sont les suivantes :

Une grande variabilité est observée dans la collection des 44 clones dans la mesure où le contenu en huile essentielle varie entre 253 à 3130 mg pour 100 gr de matières sèche pour une récolte en France au mois d'août. Cette variabilité est représentée dans le tableau 3 ci-dessous.

**Tableau 3**

| Analyse de la variabilité 44 clones de romarin | | | | |
|---|---|---|---|---|
| | MOY | MIN | MAX | TAUX DE VARIATION |
| HE (%) | 1.48 | 0.253 | 3.13 | 1-------> 12.37 |
| AO (%) | 2.66 | 0.85 | 4.08 | 1-------> 4.8 |
| HE (g/plante) | 4.93 | 0.19 | 13.65 | 1-------> 72 |
| AO (g/plante) | 9.32 | 0.3 | 23.71 | 1-------> 79 |

Il apparaît clairement des figures 7 et 8 ainsi que du tableau 1 ci-dessus que les clones n° 28 et 39 présentent le contenu le plus avantageux en EO et en AO. Aussi ces deux clones ont-ils été étudiés de façon beaucoup plus approfondie pour leur contenu en huiles essentielles, en antioxydants et pour le rendement à l'hectare de l'un et de l'autre.

### 3) CONTENU EN HUILES ESSENTIELLES DES CLONES 28 ET 39.

1660 kg du clone n° 28 et 312 kg du clone n° 39 ont été distillés en utilisant les techniques d'extraction habituelles. La charge est d'environ 300 kg de végétal frais (50% environ d'humidité) auquel on ajoute 200 l d'eau. Le chauffage est réalisé par vapeur directe (introduction par le fond de l'appareil) et circuit coquillé. Il est important, avant toute opération, de vidanger le circuit de vapeur entièrement pour éliminer les particules de fer qui se trouvent dans la canalisation.

Le chauffage est de 30 mn environ pour arriver au début de la coulée.

La distillation a une durée de 2 h 30 à partir du début de la coulée puis l'eau est vidangée par ouverture de la vanne de fond d'appareil. L'ensemble est ensuite séché par mise sous vide de l'appareil et chauffage au circuit coquillé ; la durée de ces opérations de vidange, séchage et chauffage est de 45 mn à 1 h et le processus est arrêté lorsque qu'il ne distille plus d'eau. L'appareil est ensuite déchargé par ouverture de fond basculant. Les branches sont séchées sur aire bétonnée en les étalant sur une hauteur de 10 cm environ et en les retournant fréquemment. Par triage manuel on sépare ensuite les épis de romarin des branches. Les résultats des distillations pour les clones 28 et 39 sont donnés dans les tableaux 4a et 4b ci-dessous.

### Résultats des distillations :

1)

**Tableau 4a**

| clone 28 | | | |
|---|---|---|---|
| Charge | Essence obtenue | Rendement % | |
| | | sur végétal frais | sur végétal sec (calculé) |
| 293 Kg | 1,020 Kg | 0,35 | 0,65 |
| 305 Kg | 2,580 Kg | 0,43 | 0,79 |
| 299 Kg | | | |
| 304 Kg | 2,725 Kg | 0,45 | 0,84 |
| 295 Kg | | | |
| 164 Kg | 0,735 Kg | 0,45 Kg | 0,83 |
| 1660 Kg | 7,060 Kg | 0,425 | 0,92 |

2)

**Tableau 4b**

| clone n° 39 | | | |
|---|---|---|---|
| Charge | Essence obtenue | Rendement % | |
| | | sur végétal frais | sur végétal sec (calculé) |
| 312 Kg | 1,830 Kg | 0,58 | 1,15 |

Les huiles essentielles sont ensuite évaluées quant à leur qualité olfactive d'une part et quant à leur constituant d'autre part.

Les huiles essentielles ont été évaluées sur mouillettes fraîchement trempées puis 〈〈 séchées 〉〉, en comparaison avec un échantillon commercial standard d'origine espagnole.

Les constituants des huiles essentielles des clones 28 et 39 sont déterminés par chromatographie en phase gazeuse ; l'huile essentielle issue du clone 28 possède une composition très voisine de celle de l'huile essentielle expérimentale. Toutefois la teneur en camphre n'y est que de 28% au lieu de 43,4%. Les teneurs en terpène (α et β pinène et camphène) y sont en revanche plus élevées (22% environ, entre 6% pour l'échantillon expérimental).

L'huile essentielle du clone 39 se caractérise par une teneur élevée en cinéole (22%) quasiment identique à celle de l'échantillon expérimental de Francereco.

### 3.1. Mesures des antioxydants dans les clones 28 et 39.

Après la distillation vapeur qui permet d'obtenir les huiles essentielles comme décrit plus haut, les résidus de la distillation (les drêches) sont extraits dans un réacteur avec 200 l d'éthanol, pendant 4 heures et à 25°. Le résultat de cette extraction, appelé extrait AR (pour 〈〈 antioxydant romarin 〉〉) est ensuite filtré et concentré pour donner un produit brun vert qui va être dosé. Les résultats du contenu en antioxydant sont représentés dans le tableau 5 ci-dessous : il y apparaît que aussi bien le contenu en antioxydant sur la matière première que de l'extrait est au moins deux fois supérieur à celui des extraits courants.

**Tableau 5**

| Extrait AR : comparaison entre les extraits bruts et les essais expérimentaux | | | | |
|---|---|---|---|---|
| | Contenu en AO (*) de la Matière Première | Rendement de l'extrait (%) | Contenu en AO de l'extrait (%) | Récuperation de l'AO (%) |
| Extrait brut (moyenne) | 1.5 | 8;6 | 7.80 (min. 6.7 max 10.1) | 44.7 |

| Essais expérimentaux | | | | |
|---|---|---|---|---|
| -clone 28 | 2.3 | 11.0 | 15.6 | 74.6 |
| - clone 39 | 2.5 | 12.3 | 16.2 | 79.7 |

| | | | | |
|---|---|---|---|---|
| (*) Acide carnosique + Carnosol | | | | |

Dans un autre essai, des échantillons différents des feuilles de romarin ont été analysés par HPLC. Il s'agit de deux échantillons classiques : Murcia et Nogales, les clones 28 et 39 et le clone 28 après hydro-distillation.

**Tableau 6**

| Teneur en antioxydants | | | |
|---|---|---|---|
| Echantillon | Teneur en acide carnosique | Teneur en Carnosol | Teneur en * antioxydants |
| Murcia dist. | 1.8 | 0.4 | 2.2 |
| Nogales dist. | 1.7 | 0.5 | 2.2 |
| Clone 39 | 4.5 | 0.3 | 4.8 |
| Clone 28 | 4.9 | 0.3 | 5.2 |
| Clone 28 dist. | 2.3 | 1.1 | 3.4 |
| Teneurs en % poids | | | |

| | | | |
|---|---|---|---|
| * Somme d'acide carnosique + carnosol | | | |

Le tableau 6 ci-dessus montre que la teneur en antioxydant mesurée par la somme d'acide carnosique et de carnosol est deux à trois fois plus forte que dans les échantillons courants, cette teneur étant légèrement diminuée après hydro-distillation mais restant cependant bien supérieure à la normale. L'analyse du contenu en carnosol et acide carnosique par HPLC des feuilles montre que l'hydro-distillation avec la vapeur directe est très ménageante en ce qui concerne les antioxydants. Le traitement thermique (3 heures de distillation) suivi de séchage détruit un tiers des antioxydants. La comparaison de clones de romarin sauvage et de romarin sélectionné traités et triés de la même manière montre que les clones sont nettement plus performants au regard de la teneur en AO.

Dans une expérience ultérieure la teneur antioxydante de six échantillons différents de romarin ont à nouveau été étudiés par HPLC sur feuilles séchées après extraction Soxtec. Outre la teneur en carnosol et acide carnosique, la teneur en acide rosmarinique, antioxydant hydrosoluble du romarin, ont été mesurées.

Le tableau 7 ci-dessous donne les résultats obtenus pour les clones 28 et 39.

**Tableau 7**

| Code | Age des plantes [ans] | Teneur en antioxydants (% poids) | | | |
|---|---|---|---|---|---|
| | | Acide rosmarinique | Carnosol (C) | Acide carnosique (CA) | Somme C+CA |
| H 28 | 3 | 0.8 | 0.35 | 4.65 | 5.0 |
| AM 28 | 2 | 0.25 | 0.4 | 5.2 | 5.6 |
| AM 28.1 | 2 | 0.95 | 0.35 | 5.45 | 5.8 |
| CM 28 | 1 | 0.2 | 0.5 | 5.4 | 5.9 |
| H 39 | 3 | 1.1 | 0.35 | 4.9 | 5.25 |
| AM 39 | 2 | 0.5 | 0.3 | 5.3 | 5.6 |

Les termes H 28 et H 39 signifient que les clones ont été cultivés sur un terrain de Hispareco. Les autres échantillons représentent des clones qui ont été cultivés sur plusieurs hectares sur deux autres sites AM et CM ; l'échantillon AM 28.1 provient d'un petit lot qui a été récolté un mois après les clones codés AM28.

### 3.2 Rendement des cultivars 28 et 39.

Les cultivars 28 et 39 de romarin ont 2 à 2,5 fois plus d'activité antioxydante comparés aux souches sauvages.

Cette augmentation du contenu dans ces composés à activité oxydante est accompagnée par une augmentation du contenu en huile essentielle (voir tableau 1)

Deux essais en champs en Espagne sur deux fois 2500 m2 avec chacun des clones 28 et 39 ont été réalisés. Les rendements de ces clones est de 5,6 tonnes de feuilles de romarin séchées par hectare contenant 4% de la matière sèche en composants actifs antioxydants.

Le tableau 8 ci-après les résultats obtenus avec les clones 28 et 39, comparés à des clones sauvages (Nogales et Murcia) en termes de rendement obtenu pour les huiles essentielles et pour les A.R. (extraits antioxydants obtenus à partir des drêches).

**Tableau 8 (1)**

| ESSAI INDUSTRIEL DE ROMARIN | | | | | | |
|---|---|---|---|---|---|---|
| Variété | récolte date | Poids Frais Total (T.F.W) kg | Poids Sec Total kg | Poids Feuille Sèche (T.D.W) Kg % | D.L.W. T.DW. (D.L.W.) | Matière séche |
| Farm 39 distillé 1780m2 | 24/09/91 | 791 | 266 | 172 | 64.7 | 92.0 |
| Farm 28 distillé 5300 m2 | 25/09/91 et 26/09/91 | 4013 | 1346 | 772 | 57.4 | 94.0 |
| Hispareco.28 distillé 1700 m2 | de 19/8/91 à 21/8/91 | 2300 | 898 | 482 | 53.6 | 94.6 |
| Nogales | 22/07/91 | 460 | 290 | 130 | 44.8 | 94.0 |
| Murcia | 30/07/91 | 2070 | 931 | 416 | 44.6 | 94.0 |
| Hispareco. non distillé 396m2 | 28/08/91 | 795 | 332 | 183 | 55.1 | 94.0 |
| Hispareco.39 non distillé 320m2 | 28/08/91 | 787 | 327 | 223 | 67.9 | 94.0 |

**Tableau 8 (2)**

| ESSAI INDUSTRIEL DE ROMARIN | | | | | | | | | |
|---|---|---|---|---|---|---|---|---|---|
| Variété | récolte date | Rendem. approx. kg/Ha | Feuilles sèches Kg/Ha % | D.L.W/T.F.W. | Huiles Essen. litres | E.O/T.F.W % | E.O/T.D.W % | E.O/D.L.W % | A.R/D.L.W % |
| Farm 39 distillé 1780m2 | 24/09/91 | 4500 | 966 | 21.74 | 4.82 | 0.60 | 1.8 | 2.80 | 3.0 |
| Farm 28 distillé 5300 m2 | 25/09/91 et 26/09/91 | 7572 | 1456 | 19.23 | 18.43 | 0.46 | 1.36 | 2.38 | 3.6 |
| Hispareco.28 distillé 1700m2 | de19/8/91 à 21/8/91 | 13529 | 2835 | 21.00 | 11.96 | 0.52 | 1.33 | 2.48 | 3.4 |
| Nogales Murcia Hispareco. non distillé 396m2 | 22/07/91 | ----- | ----- | 28.26 | 3.10 | 0.67 | 1.06 | 2.38 | 2.2. |
| | 30/07/91 | ----- | ----- | 20.11 | 9.93 | 0.47 | 1.06 | 2.38 | 2.3 |
| | 28/08/91 | -20080 | 4624 | 23.00 | ---- | ---- | ---- | ----- | 5.2 |
| Hispareco.39 non distillé 320m2 | 28/08/91 | 24590 | 6983 | 28.40 | ------ | ------ | ---- | ---- | 4.8 |

### 4. EMPREINTES MOLECULAIRES

Des empreintes moléculaires (ou "Finger Prints" en anglais") ont été réalisées parmi une population de 50 clones de romarin renfermant notamment les clones 28 et 39. Les résultats montrent qu'il est possible de différencier sans ambiguité les clones 28 et 39.

La méthode utilisée est la technique AFLP (qui est l'abbréviation anglaise de "Amplified Fragment Length Polymorphism") décrite dans EP534858 (Keygene). Le principe de la méthode repose sur l'amplification sélective de fragments de restriction grâce à des amorces nucléotidiques spécifiques. Pour chaque combinaison "enzyme de restriction et amorces" (EA) un polymorphisme spécifique est révélé en gel d'acrylamide. Une seule combinaison EA permet la lecture de plusieurs dizaines de bandes, qui sont chacunes assimilables à une allèle.

### REFERENCES

(1) PRUTHI J.S. (1980) - 〈〈 Spices and Condiments : Chemistry, Microbiology, Technology 〉〉, Academic Press, London.
(2) SHELEF L. A. (1983) - J. Food Safety 6, 29.
(3) CHIPAULT .J.R. et al (1952) - Food Res. 17, 46.
(4) CHIPAULT .J.R. et al (1955) - Food Res. 20, 443.
(5) CHIPAULT .J.R. et al (1956) - Food Tech. 10, 209.
(6) BERNER D.L. et al (1985) -Brevet EU 3'732'111.
(7) CHANG S.S. et al (1973) - Brevet EU 3'950'266.
(8) CHANG S.S. et al (1977) - J. Food Sci. 42, 1102.
(9) HARTMANN V.E. et al (1980) - Parfums, cosmétiques, arômes No 36, 33.
(10) KIMURA Y. et al (1981) - Brevet Européen 0'038'959.
(11) CALAME J.P. (1985) - Brevet Européen 0'154'258
(12) TATEO F. et al (1988) Perfumer & Flavorist 13 (10/11), 27.
(13) CUVELIER M.E. et al (1991) - dans 〈〈 9e Journées Internationales Huiles essentielles -1990 〉〉 Rivista Italiana EPPOS 2 (3), 374.
(14) BERSET C. et al (1989) - Lebensm. Wiss u. Technol. 22, 15.
(15) BARBUT S. et al (1985) - J. Food Sci. 50, 1356.
(16) BRACCO U. et al (1981) - JAOCS 58, 686.
(17) AESCHBACH R. et al (1986) - Bull. Liaison Groupe Polyphénol 13, 56.
(18) GRANGER R. (1973) - Parf. Cosm. Sav. France 3, 133, 307.
(19) LAMBELET P., SAUCY F., LOLIGER J., (1985) Chemical Evidence for interactions between Vitamin E and C. ; Experientia 41, 1384-88.
(20) WOESTENBURG W.J., ZAALBERG J., - Determination of Stability of Edible Oils - Inerlaboratory test with the Automated Rancimat Method; Fette, Seifen, Anstrichmittel 88, 53-6 (1986).
(21) Aruoma O.J. et al., (1992) Xenobiotica 22, 257.
(22) William J.G.K. et al. (1990), Nucleic Acids Research 18, 6531

## Revendications

1. Matière végétale séchée de plants d'épices, susceptible d'être obtenue après récolte d'une variété de plants d'épice et séchage de cette variété, caractérisée en ce que son contenu en antioxydants est supérieur à 3,5% en poids du matière sèche, et son contenu en huiles essentielles est supérieur à 1,5% en poids de matière sèche.

2. Matière végétale selon la revendication 1, caractérisée en ce que les antioxydantss contiennent au moins du carnosol et de l'acide carnosique.

3. Matière végétale selon les revendications 1 ou 2, caractérisée en ce qu'elle est issue de plants de romarin.

4. Utilisation d'une matière végétale séchée de plants d'épices, dont le contenu en anti-oxydants est supérieur à 3,5% en poids du matière sèche, et le contenu en huiles essentielles est supérieur à 1,5% en poids de matière sèche, pour en extraire des huiles essentielles et des antioxydants valorisables à la fois dans l'industrie agro-alimentaire et dans la parfumerie.

## Claims

1. Dried vegetable matter from spice plants, which can be obtained after harvesting a variety of spice plant and drying this variety, characterized in that its antioxidant content is greater than 3.5 % by weight of dry matter, and its essential oils content is greater than 1.5 % by weight of dry matter.

2. Vegetable matter according to claim 1, characterized in that the antioxidants contain at least carnosol and carnosic acid.

3. Vegetable matter according to claims 1 or 2, characterized in that it is derived from rosemary plants.

4. Use of dried vegetable matter from spice plants, of which the antioxidants content is greater than 3.5 % by weight of dry matter and the essential oils content is greater than 1.5 % by weight of dry matter, for the purpose of extracting therefrom essential oils and antioxidants which can be profitably used both in the farm produce industry and in perfumery.

## Patentansprüche

1. Getrocknetes pflanzliches Material aus Gewürzpflanzen, das nach dem Ernten einer Gewürzpflanzensorte und dem Trocknen dieser Sorte erhalten werden kann, dadurch gekennzeichnet, daß sein Gehalt an Antioxidantien mehr als 3,5 Gew.-% der Trockenmasse beträgt und daß sein Gehalt an etherischen Ölen mehr als 1,5 Gew.-% der Trockenmasse beträgt.

2. Pflanzliches Material nach Anspruch 1, dadurch gekennzeichnet, daß die Antioxidantien wenigstens Carnosol und Carnosinsäure enthalten.

3. Pflanzliches Material nach Anspruch 1 oder 2, dadurch gekennzeichnet, daß es aus Rosmarinpflanzen erhalten wurde.

4. Verwendung eines getrockneten pflanzlichen Materials aus Gewürzpflanzen, dessen Gehalt an Antioxidantien mehr als 3,5 Gew. -% der Trockenmasse beträgt und dessen Gehalt an etherischen Ölen mehr als 1,5 Gew. -% der Trockenmasse beträgt, zum Extrahieren von etherischen Ölen und Antioxidantien, die gleichzeitig in der Agrar- und Lebensmittelindustrie und in der Parfümerie verwertbar sind.
